(19) Europäisches Patentamt
European Patent Office
Office européen des brevets

(11) **EP 4 787 453 A1**

(12) **EUROPEAN PATENT APPLICATION**
published in accordance with Art. 153(4) EPC

(43) Date of publication:
**05.08.2026 Bulletin 2026/32**

(21) Application number: **24872341.3**

(22) Date of filing: **26.09.2024**

(51) International Patent Classification (IPC):
**H01M 4/133** (2010.01)    **H01M 4/36** (2006.01)
**H01M 4/38** (2006.01)    **H01M 4/48** (2010.01)
**H01M 4/587** (2010.01)    **H01M 10/0525** (2010.01)
**H01M 10/0587** (2010.01)

(52) Cooperative Patent Classification (CPC):
**H01M 4/133; H01M 4/36; H01M 4/38; H01M 4/48;
H01M 4/587; H01M 10/0525; H01M 10/0587;**
Y02E 60/10; Y02P 70/50

(86) International application number:
**PCT/JP2024/034323**

(87) International publication number:
**WO 2025/070555 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **29.09.2023  JP 2023169657**

(71) Applicant: **Panasonic Intellectual Property
Management Co., Ltd.
Kadoma-shi, Osaka 571-0057 (JP)**

(72) Inventors:
• **NAKADO Hiroki
  Kadoma-shi, Osaka 571-0057 (JP)**
• **TASHITA Takamitsu
  Kadoma-shi, Osaka 571-0057 (JP)**

(74) Representative: **Novagraaf International SA
Chemin de l'Echo 3
1213 Onex, Geneva (CH)**

(54) **NONAQUEOUS ELECTROLYTE SECONDARY BATTERY**

(57)    The present invention is characterized in that: a negative electrode (12) includes a negative electrode current collector (30) and a negative electrode mixture layer (32) that is disposed on the surface of the negative electrode current collector (30) and contains a negative electrode active material; the negative electrode layer (32) has a first negative electrode mixture layer (34) that is disposed on the surface side of the negative electrode mixture layer (32), and a second negative electrode mixture layer (36) that is disposed between the first negative electrode mixture layer (34) and the negative electrode current collector (30); the first negative electrode mixture layer (34) contains graphite particles A that have a 20% compressive strength of 20 MPa or more; the second negative electrode mixture layer (36) contains graphite particles B that have a 20% compressive strength of less than 20 MPa; and with respect to the negative electrode mixture layer (32), the ratio of the thickness of the first negative electrode mixture layer (34) to the thickness of the negative electrode mixture layer (32) at the inner end of winding is greater than the ratio of the thickness of the first negative electrode mixture layer (34) to the thickness of the negative electrode mixture layer (32) at the outer end of winding.

Figure 4

**Description**

TECHNICAL FIELD

The present disclosure relates to a non-aqueous electrolyte secondary battery.

BACKGROUND

Non-aqueous electrolyte secondary batteries are widely in use as secondary batteries having a high energy density. In general, graphite is used as a negative electrode active material of the non-aqueous electrolyte secondary battery. Patent Literature 1 discloses a technique in which graphite particles having a small internal porosity are distributed in a greater extent on a surface side of a negative electrode mixture layer. According to this technique, peeling-off of the graphite particles from a negative electrode current collector is suppressed, and charge-discharge cycle characteristics can be improved.

CITATION LIST

PATENT LITERATURE

Patent Literature 1: WO 2019/239652

SUMMARY

In recent years, with wide spreading of electric vehicles or the like as background, there is an increasing demand for improvement of the charge-discharge cycle characteristics of batteries. After extensive studies, the present inventors have found that, in a non-aqueous electrolyte secondary battery having an electrode assembly of a wound type, because charge and discharge reactions tend to not readily progress at an inner side of winding (winding inner side) of a negative electrode, the charge-discharge cycle characteristics tend to be degraded. It can be deduced that this is because an amount of non-aqueous electrolyte retained on the winding inner side of the negative electrode is smaller in comparison to an amount of the non-aqueous electrolyte retained on a winding outer side of the negative electrode. Patent Literature 1 does not review promotion of the charge and discharge reactions at the winding inner side, and there remain rooms of improvement.

According to one aspect of the present disclosure, there is provided a non-aqueous electrolyte secondary battery including: an electrode assembly in which a positive electrode having a band shape and a negative electrode having a band shape are wound with a separator therebetween; a non-aqueous electrolyte; and a outer housing body that houses the electrode assembly and the non-aqueous electrolyte, wherein the negative electrode includes a negative electrode current collector, and a negative electrode mixture layer disposed on at least one surface of the negative electrode current collector, and which contains a negative electrode active material, the negative electrode mixture layer includes a first negative electrode mixture layer disposed on a side of a surface of the negative electrode mixture layer, and a second negative electrode mixture layer disposed between the first negative electrode mixture layer and the negative electrode current collector, the first negative electrode mixture layer contains graphite particles A having a 20% compressive strength of greater than or equal to 20 MPa, the second negative electrode mixture layer contains graphite particles B having the 20% compressive strength of less than 20 MPa, and, in the negative electrode mixture layer, a ratio of a thickness of the first negative electrode mixture layer with respect to a total thickness of the first negative electrode mixture layer and the second negative electrode mixture layer at a winding inner end is greater than a ratio of a thickness of the first negative electrode mixture layer with respect to a total thickness of the first negative electrode mixture layer and the second negative electrode mixture layer at a winding outer end.

According to a non-aqueous electrolyte secondary battery of an aspect of the present disclosure, charge-discharge cycle characteristics can be improved.

BRIEF DESCRIPTION OF DRAWINGS

FIG. 1 is a cross-sectional diagram in an axial direction of a non-aqueous electrolyte secondary battery according to an embodiment of the present disclosure.
FIG. 2 is a perspective diagram of an electrode assembly of a wound type provided in the non-aqueous electrolyte secondary battery according to an embodiment of the present disclosure.

FIG. 3 is a diagram showing a negative electrode provided in the non-aqueous electrolyte secondary battery according to an embodiment of the present disclosure, in an unfolded state.

FIG. 4 is a cross-sectional diagram of the negative electrode provided in the non-aqueous electrolyte secondary battery according to an embodiment of the present disclosure.

FIG. 5 is a diagram showing a change of a ratio of a thickness of a first negative electrode mixture layer in the negative electrode provided in the non-aqueous electrolyte secondary battery according to an embodiment of the present disclosure.

DESCRIPTION OF EMBODIMENTS

A non-aqueous electrolyte secondary battery according to an embodiment of the present disclosure will now be described in detail with reference to the drawings. In the following, a specific shape, a specific material, a specific numerical value, a specific direction, and the like are merely exemplary for the purpose of facilitating understanding of the present disclosure, and these parameters may be suitably changed according to the specification of the non-aqueous electrolyte secondary battery. In the following description, when a plurality of embodiments and alternative configurations are included, suitable combinations of the characteristic portions thereof are contemplated from the start.

In the following, a circular cylindrical battery in which an electrode assembly 14 of a wound type is housed in a outer housing body 16 having a circular cylindrical shape with a bottom will be exemplified as the non-aqueous electrolyte secondary battery, but the outer housing body of the battery is not limited to the housing can of the circular cylindrical shape. The non-aqueous electrolyte secondary battery according to the present disclosure may alternatively be, for example, a polygonal battery having a polygonal housing can, a coin-shape battery having a coin-shape housing can, or a pouch-type battery having a outer housing body formed from a laminated sheet including a metal layer and a resin layer.

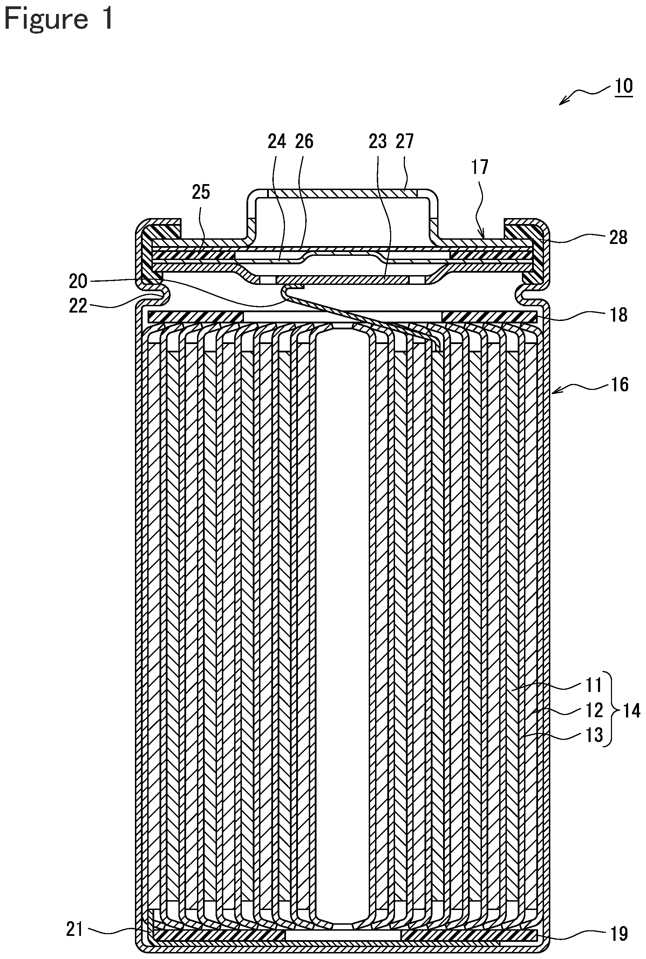

FIG. 1 is a cross-sectional diagram of a non-aqueous electrolyte secondary battery 10 according to an embodiment of the present disclosure. As illustrated in FIG. 1, the non-aqueous electrolyte secondary battery 10 comprises the electrode assembly 14 of a wound type, a non-aqueous electrolyte (not shown), and the outer housing body 16 which houses the electrode assembly 14 and the non-aqueous electrolyte.

As will be described in detail later, the electrode assembly 14 comprises a positive electrode 11, a negative electrode 12, and a separator 13, and has a wound structure in which the positive electrode 11 and the negative electrode 12 are wound in a spiral shape with the separator 13 therebetween. The electrode assembly 14 comprises a positive electrode lead 20 connected to the positive electrode 11 by welding or the like, and a negative electrode lead 21 connected to the negative electrode 12 by welding or the like.

The non-aqueous electrolyte has lithium ion conductivity. The non-aqueous electrolyte contains a non-aqueous solvent and an electrolyte salt dissolved in the non-aqueous solvent. For the non-aqueous solvent, for example, esters, ethers, nitriles, amides, or a mixture solvent of two or more of these solvents may be employed. Examples of the non-aqueous solvent include ethylene carbonate (EC), ethylmethyl carbonate (EMC), dimethyl carbonate (DMC), diethyl carbonate (DEC), and a mixture solvent of these solvents. The non-aqueous solvent may include a halogen-substituted product in which at least a part of hydrogens of the solvent described above is substituted with a halogen atom such as fluorine (for example, fluoroethylene carbonate or the like). For the electrolyte salt, for example, a lithium salt such as $LiPF_6$ is employed.

The outer housing body 16 is a metal container having a circular cylindrical shape with a bottom and having one end side in an axial direction opened, and the opening of the outer housing body 16 is blocked by a sealing assembly 17. In the following, for the convenience of the description, the side of the sealing assembly 17 of the battery will be referred to as an "upper side", and the side of the bottom of the outer housing body 16 will be referred to as a "lower side".

Insulating plates 18 and 19 are disposed respectively above and below the electrode assembly 14. In the illustrated example structure of FIG. 1, the positive electrode lead 20 extends through a through hole of the insulating plate 18 toward the side of the sealing assembly 17, and the negative electrode lead 21 extends to the side of the bottom of the housing can 16 through an outer side of the insulating plate 19. The positive electrode lead 20 is connected to a lower surface of an internal terminal plate 23 of the sealing assembly 17 by welding or the like, and a cap 27 which is a top plate of the sealing assembly 17 electrically connected to the internal terminal plate 23 serves as a positive electrode terminal. The negative electrode lead 21 is connected to an inner surface of the bottom of the housing can 16 by welding or the like, and the outer housing body 16 serves as a negative electrode terminal.

A gasket 28 is provided between the outer housing body 16 and the sealing assembly 17, so as to secure hermiticity inside the battery. The outer housing body 16 has a groove portion 22 in which a part of a side surface portion is projected toward an inner side, and which supports the sealing assembly 17. The groove portion 22 is desirably formed in an annular shape along a circumferential direction of the outer housing body 16, and supports the sealing assembly 17 with the upper surface thereof. The sealing assembly 17 is fixed at an upper part of the outer housing body 16 by the groove portion 22 and an opening end of the outer housing body 16 crimped with respect to the sealing assembly 17.

The sealing assembly 17 has a structure in which the internal terminal plate 23, a lower vent member 24, an insulating member 25, an upper vent member 26, and the cap 27 are layered in this order from the side of the electrode assembly 14. The members of the sealing assembly 17 have, for example, a circular disk shape or a ring shape, and members other than the insulating member 25 are electrically connected to each other. The lower vent member 24 and the upper vent member 26 are connected to each other at respective center parts, and the insulating member 25 interposes between peripheral parts of the vent members. When an internal pressure of the battery increases due to abnormal heat generation, the lower vent member 24 deforms to press the upper vent member 26 upward toward the cap 27 and ruptures, and a current path between the lower vent member 24 and the upper vent member 26 is shut out. When the internal pressure further increases, the upper vent member 26 ruptures, and gas is exhausted from an opening of the cap 27.

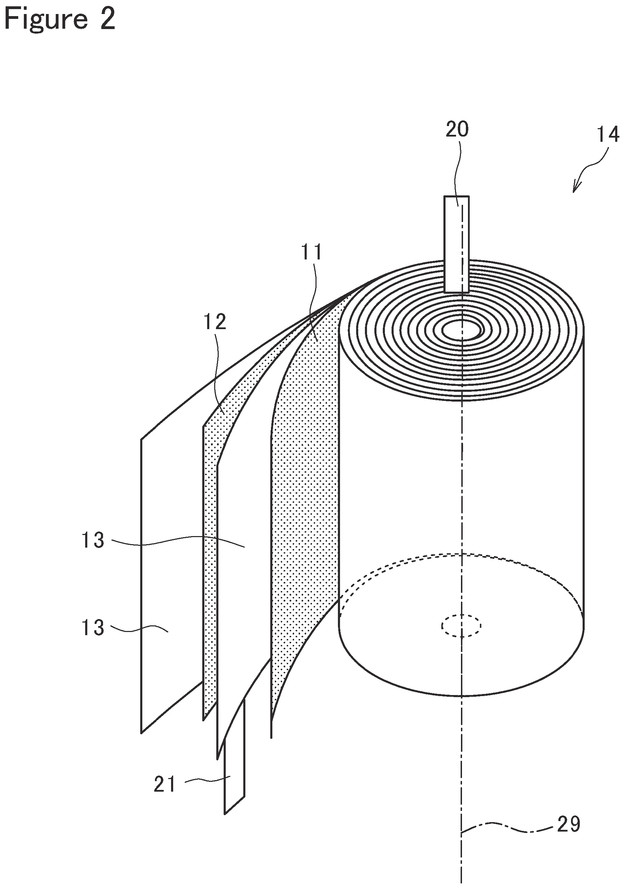

Next, the electrode assembly 14 will be described in detail with reference to FIG. 2. FIG. 2 is a perspective diagram of the electrode assembly 14. As already described, the electrode assembly 14 has a wound structure in which the positive electrode 11 and the negative electrode 12 are wound in a spiral shape with the separator 13 therebetween. The positive electrode 11, the negative electrode 12, and the separator 13 are each formed in a band shape, and are wound in the spiral shape around a winding core disposed along a winding axis 29, to thereby result in a state in which these members are alternately layered in a radial direction of the electrode assembly 14. In the electrode assembly 14, a longitudinal direction of the positive electrode 11 and the negative electrode 12 serves as a winding direction, and a width direction of the positive electrode 11 and the negative electrode 12 serves as an axial direction. The positive electrode lead 20 extends, at an upper end of the electrode assembly 14, in the axial direction from a region at approximately center in a radial direction between a center and an outermost circumference. The negative electrode lead 21 extends in the axial direction at a lower end of the outermost circumference of the electrode assembly 14. Alternatively, the negative electrode lead 21 may extend in the axial direction from a region near the winding axis 29 at the lower end of the electrode assembly 14.

The positive electrode 11 comprises a positive electrode current collector and a positive electrode mixture layer disposed on the positive electrode current collector. For the positive electrode current collector, there may be employed a foil of a metal which is stable within a potential range of the positive electrode 11 such as aluminum and an aluminum alloy, a film on a surface layer of which the metal is disposed, or the like. The positive electrode mixture layer contains a positive electrode active material, a conductive agent, and a binder. The positive electrode 11 can be produced, for example, by applying a positive electrode mixture slurry including the positive electrode active material, the conductive agent, and the binder on the positive electrode current collector, drying the applied film, and compressing the dried film, to thereby form the positive electrode mixture layers on both surfaces of the positive electrode current collector.

The positive electrode mixture layer contains, as the positive electrode active material, a lithium-containing composite oxide of a particulate form. The lithium-containing composite oxide is a composite oxide containing, in addition to Li, a metal element such as Co, Mn, Ni, Al, and the like. The metal element forming the lithium-containing composite oxide is, for example, at least one element selected from Mg, Al, Ca, Sc, Ti, V, Cr, Mn, Fe, Co, Ni, Cu, Zn, Ga, Ge, Y, Zr, Sn, Sb, W, Pb, and Bi. Of these elements, the lithium-containing composite oxide desirably contains at least one element selected from Co, Ni, Al, and Mn. Examples of the desirable composite oxide include a lithium-containing composite oxide containing Ni, Co, and Mn, and a lithium-containing composite oxide containing Ni, Co, and Al.

The lithium-containing composite oxide is, for example, a secondary particle formed by aggregation of a plurality of primary particles. A volume-based median diameter (D50) of the composite oxide is not particularly limited, and, as an example, is greater than or equal to 3 μm and less than or equal to 30 μm, or is desirably greater than or equal to 5 μm and less than or equal to 25 μm. When the composite oxide is the secondary particle formed by aggregation of primary particles, D50 of the composite oxide refers to D50 of the secondary particle. D50 refers to a particle diameter at which an accumulation of frequencies in a volume-based granularity distribution reaches 50% from the lower side, and is also called a middle size. The granularity distribution of the composite oxide can be measured using a granularity distribution measurement apparatus of a laser diffraction type (for example, MT3000II manufactured by MicrotracBEL corporation), and using water as a dispersion medium (this is similarly applicable to the case of the negative electrode active material).

An average particle diameter of the primary particles forming the lithium-containing composite oxide is, for example, greater than or equal to 0.05 μm and less than or equal to 1 μm. The average particle diameter of the primary particles is calculated by averaging diameters of circumscribing circles of primary particles extracted through analysis of a scanning electron microscope (SEM) image of a cross section of the secondary particle.

As the conductive agent contained in the positive electrode mixture layer, there may be exemplified carbon materials such as carbon black such as acetylene black and Ketjenblack, graphite, carbon nanotubes (CNT), carbon nanofiber, graphene or the like. As the binder contained in the positive electrode mixture layer, there may be exemplified a fluororesin such as polytetrafluoroethylene (PTFE), polyvinylidene fluoride (PVDF), or the like, polyacrylonitrile (PAN), polyimide, an acrylic resin, polyolefin, or the like. Alternatively, these resins may be employed along with carboxymethylcellulose (CMC) or a salt thereof, polyethylene oxide (PEO), or the like.

For the separator 13, a porous sheet having ion permeability and an insulating property is employed. Specific examples of the porous sheet include a microporous thin film, a woven fabric, a non-woven fabric, or the like. As a material forming the separator 13, desirably, polyolefin such as polyethylene and polypropylene, cellulose, or the like is employed.

The separator 13 may have a single-layer structure or a multilayer structure. On a surface of the separator 13, a resin layer of a high heat resistivity, such as an aramid resin, or the like, may be formed.

A filler layer containing a filler of inorganic materials may be formed at an interface between the separator 13 and the positive electrode 11 and/or at an interface between the separator 13 and the negative electrode 12. As the filler of the inorganic materials, there may be exemplified oxides containing a metal element such as Ti, Al, Si, Mg, or the like, a phosphate compound, or the like. The filler layer can be formed by applying a slurry containing the filler on a surface of the positive electrode 11, the negative electrode 12, or the separator 13.

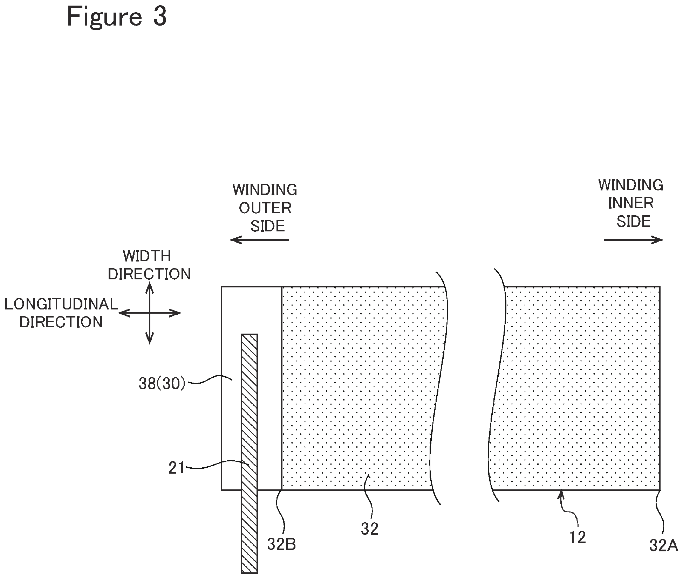

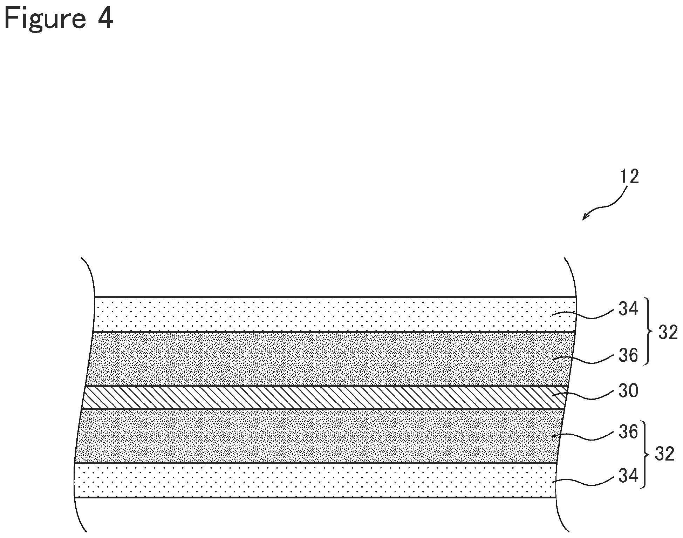

Next, the negative electrode 12 of the electrode assembly 14 will be described in detail with further reference to FIGs. 3 and 4. FIG. 3 is a diagram showing the negative electrode 12 in an unfolded state, and FIG. 4 is a cross-sectional diagram of the negative electrode 12.

As shown in FIGs. 3 and 4, the negative electrode 12 comprises a negative electrode current collector 30, and a negative electrode mixture layer 32 containing a negative electrode active material, and disposed on at least one surface of the negative electrode current collector 30. In the present embodiment, the negative electrode mixture layer 32 is disposed on both surfaces of the electrode current collector 30 except for an exposed portion 38 to which the negative electrode lead 21 is connected. Alternatively, the exposed portion 38 may be provided on a winding inner side of the negative electrode 12 instead of a winding outer side of the negative electrode 12.

For the negative electrode current collector 30, there may be employed a foil of a metal stable within a potential range of the negative electrode 12 such as copper or the like, a film on a surface of which the metal is placed, or the like. No particular limitation is imposed on a thickness of the negative electrode current collector 30, but from the viewpoint of balancing between a strength of the negative electrode 12 and reduction of a weight of the negative electrode 12, the thickness is desirably greater than or equal to 1 $\mu$m and less than or equal to 50 $\mu$m, and is more desirably greater than or equal to 5 $\mu$m and less than or equal to 30 $\mu$m.

The negative electrode mixture layer 32 comprises a first negative electrode mixture layer 34 containing a negative electrode active material, and disposed on a side of a surface of the negative electrode mixture layer 32, and a second negative electrode mixture layer 36 disposed between the first negative electrode mixture layer 34 and the negative electrode current collector 30. In the following, the first negative electrode mixture layer 34 and the second negative electrode mixture layer 36 may be collectively referred to as the negative electrode mixture layer 32. A thickness of the negative electrode mixture layer 32 is desirably greater than or equal to 100 $\mu$m and less than or equal to 300 $\mu$m, and is desirably greater than or equal to 150 $\mu$m and less than or equal to 250 $\mu$m. In the present embodiment, the negative electrode mixture layer 32 has an approximately uniform thickness over a longitudinal direction. As will be described in detail later, a thickness of the first negative electrode mixture layer 34 is greater at an inner end of winding (winding inner end) 32A in comparison to an outer end of winding (winding outer end) 32B. As a consequence, a thickness of the second negative electrode mixture layer 36 is smaller at the winding inner end 32A in comparison to the winding outer end 32B.

In the present embodiment, both the first negative electrode mixture layer 34 and the second negative electrode mixture layer 36 contain graphite particles and a silicon-containing material as the negative electrode active material. On the other hand, the kinds of the graphite particles contained in the first negative electrode mixture layer 34 and the second negative electrode mixture layer 36 differ from each other. Alternatively, a configuration may be employed in which the first negative electrode mixture layer 34 or the second negative electrode mixture layer 36 does not contain the silicon-containing material. A content of the negative electrode active material contained in the negative electrode mixture layer 32 is desirably greater than or equal to 85 mass% and less than or equal to 99.5 mass% with respect to a total mass of the negative electrode mixture layer 32, and is more desirably greater than or equal to 90 mass% and less than or equal to 99 mass%. The content of the negative electrode active material may be the same or different between the first negative electrode mixture layer 34 and the second negative electrode mixture layer 36.

The first negative electrode mixture layer 34 contains graphite particles having a 20% compressive strength of greater than or equal to 20 MPa (hereinafter also referred to as "graphite particles A") as the negative electrode active material. The "20% compressive strength" of the graphite particles refers to a pressure necessary to compress the particle diameter of the graphite particles by 20%, and can be measured through a method described below. By the first negative electrode mixture layer 34 containing the graphite particles A of high hardness, the graphite particles A do not crack in a rolling process during the manufacture of the negative electrode, and pores formed on the grain boundary of the graphite particles A can be maintained. In addition, as described above, the first negative electrode mixture layer 34 is disposed on the surface side of the negative electrode mixture layer 32. Because of this, as a result of the pores formed inside the first negative electrode mixture layer 34, the non-aqueous electrolyte tends to easily permeate to the side of the negative electrode current collector 30 through the first negative electrode mixture layer 34.

It is sufficient that the 20% compressive strength of the graphite particles A contained in the first negative electrode mixture layer 34 be greater than or equal to 20 MPa, but the 20% compressive strength is desirably greater than or equal to 22 MPa, and is more desirably greater than or equal to 24 MPa. As the 20% compressive strength of the graphite particles A becomes larger, it becomes more difficult for the graphite particles A to be compressed during the manufacture of the negative electrode 12, and more pores formed at the grain boundary of the graphite particles A are maintained. In the rolling process by a roll-press machine in the manufacturing process, the 20% compressive strength of the graphite particles A can be controlled using a line pressure (kgf/cm) which is a load with respect to a roll width. In consideration of the compressive strength of the graphite particles A contained in the first negative electrode mixture layer 34 and a density of the first negative electrode mixture layer 34, the roll-press pressure necessary for the rolling is desirably greater than or equal to 400 kgf/cm and less than or equal to 1000 kgf/cm.

The 20% compressive strength of the graphite particles can be obtained through measurement using a micro-compression testing machine (for example, "MCT-W201" manufactured by Shimadzu Corporation) under the following measurement conditions. More specifically, for one sample particle, an amount of deformation of the sample particle and a load are measured when a load is applied with the following load velocity. The 20% compressive strength is then calculated by substituting the load (N) and the particle diameter of the sample particle before deformation when the sample particle is 20%-compressed with respect to the particle diameter of the sample particle before deformation (particle diameter measured by a CCD camera), into the following equation.

$$20\% \text{ compressive strength (MPa)} = 2.8 \times \text{load (N)}/\{\pi \times (\text{particle diameter (mm)})^2\}$$

<Measurement Conditions for 20% Compressive Strength>

Test temperature: normal temperature (25°C)
Upper pressurization element: planar pressure element with a diameter of 50 $\mu$m (made of diamond)
Lower pressurization plate: SKS flat plate
Measurement mode: compressive test
Test load: minimum 10 mN, maximum 50 mN
Load velocity: minimum 0.178 mN/sec., maximum 0.221 mN/sec.
Displacement full-scale: 20 $\mu$m

For the graphite particles, graphite-based materials which are used in the related art as the negative electrode active material of the non-aqueous electrolyte secondary battery may be used. For example, natural graphite such as massive graphite, amorphous graphite, or the like, or artificial graphite such as massive artificial graphite, graphitized meso-phase carbon microbeads, or the like may be used. As a method of increasing the 20% compressive strength of the graphite particles, for example, a method may be exemplified in which graphite particles formed from natural graphite or the like and coalbased or petroleum-based pitch are mixed and thermally treated, so as to coat the surface of the graphite particles with amorphous graphite. By coating the surface of the graphite particles with the amorphous graphite, the 20% compressive strength can be increased while securing the electrical conductivity of the graphite particles. An amount of coating of the amorphous graphite formed on the surface of the graphite particles is not particularly limited, and is, for example, greater than or equal to 2 mass% and less than or equal to 6 mass% with respect to the mass of the graphite particles, or is desirably greater than or equal to 3 mass% and less than or equal to 5 mass%, in consideration of securing the electrical conductivity and diffusivity of Li ions into the inside of the graphite particles.

In the first negative electrode mixture layer 34, a content of the graphite particles A with respect to the total mass of the negative electrode active material is desirably greater than or equal to 30 mass%, is more desirably greater than or equal to 40 mass%, and is further desirably greater than or equal to 50 mass%. When the content of the graphite particles A with respect to the total mass of the negative electrode active material is greater than or equal to 30 mass%, pores of a suitable size are formed inside the first negative electrode mixture layer 34, and it becomes easier for the non-aqueous electrolyte to permeate to the side of the negative electrode current collector 30 through the first negative electrode mixture layer 34. Further, the content of the graphite particles A with respect to the total mass of the negative electrode active material is desirably less than or equal to 95 mass%, is more desirably less than or equal to 90 mass%, and is further desirably less than or equal to 85 mass%. As described above, the graphite particles A tend to be less compressed in the rolling process during the manufacture of the negative electrode. As such, when the content of the graphite particles A with respect to the total mass of the negative electrode active material exceeds 95 mass%, excessive pores are formed in the first negative electrode mixture layer 34, and a distribution tends to be caused in the thickness of the negative electrode mixture layer 32 along the longitudinal direction of the electrode plate. As a result, unevenness of charge and discharge reactions is caused along the longitudinal direction of the electrode plate, possibly resulting in degradation of the charge-discharge cycle characteristics. Thus, the content of the graphite particles A with respect to the total mass of the negative electrode active material in the first negative electrode mixture layer 34 is desirably greater than or equal to 30 mass% and less than or equal to 95 mass%, is more desirably greater than or equal to 40 mass% and less than or equal to 90 mass%, and is further desirably greater than or equal to 50 mass% and less than or equal to 85 mass%. The first negative electrode mixture layer 34 may contain graphite particles having the 20% compressive strength of less than 20 MPa (hereinafter also called "graphite particles B"), but from the viewpoint of formation of the pores inside the first negative electrode mixture layer 34, desirably, the first negative electrode mixture layer 34 contains more of the graphite particles A than the graphite particles B.

Particle diameters of the graphite particles A and the graphite particles B are not particularly limited, and an example volume-based median diameter (D50) is greater than or equal to 1 $\mu$m and less than or equal to 50 $\mu$m, and is desirably greater than or equal to 5 $\mu$m and less than or equal to 40 $\mu$m. The granularity distribution can be measured using a granularity distribution measurement apparatus of a laser diffraction type (for example, MT3000II manufactured by MicrotracBEL corporation), and using water as a dispersion medium. BET specific surface areas of the graphite particles A and the graphite particles B are not particularly limited, and an example is greater than or equal to 0.5 m$^2$/g and less than or equal to 8.0 m$^2$/g. The BET specific surface areas of the particle sizes of the graphite particles A and the graphite particles B can be measured according to the BET method (nitrogen adsorption method) described in JIS R1626.

As described above, the second negative electrode mixture layer 36 contains graphite particles as the negative electrode active material. On the other hand, the second negative electrode mixture layer 36 contains, as the graphite particles, the graphite particles B as the primary component, and contains almost no graphite particles A. More specifically, a content of the graphite particles A contained in the second negative electrode mixture layer 36 is less than or equal to 10 mass% with respect to a total mass of the negative electrode active material in the second negative electrode mixture layer 36, is desirably less than or equal to 5 mass%, is more desirably less than or equal to 3 mass%, and is further desirably less than or equal to 1 mass%. When the content of the graphite particles A contained in the second negative electrode mixture layer 36 exceeds 10 mass%, excessive pores tend to be generated in the second negative electrode mixture layer 36, resulting in reduction of the contact property between the second negative electrode mixture layer 36 and the negative electrode current collector 30, and possible degradation of the charge-discharge cycle characteristics of the battery. Further, a content of the graphite particles B with respect to the total mass of the negative electrode active material in the second negative electrode mixture layer 36 is, for example, greater than or equal to 50 mass% and less than or equal to 100 mass%.

In the present embodiment, as described above, the first negative electrode mixture layer 34 and the second negative electrode mixture layer 36 contain a silicon-containing material. With the inclusion of the silicon-containing material, it becomes easier to achieve both high capacity and superior cycle characteristics. Alternatively, the first negative electrode mixture layer 34 and the second negative electrode mixture layer 36 may contain, as the negative electrode active material, a carbon material other than the graphite particles, or a compound containing an element which forms an alloy with Li such as Sn, in addition to the graphite particles and the silicon-containing material.

The silicon-containing material may be any material which contains Si, and examples include a silicon alloy, a silicon compound, and a composite material containing Si. Of these, the composite material containing Si is desirable. D50 of the composite material is in general smaller than D50 of the graphite particles. The volume-based D50 of the composite material is, for example, greater than or equal to 1 $\mu$m and less than or equal to 15 $\mu$m. As the silicon-containing material, one material may be used, or a combination of two or more materials may be used in combination.

A desirable composite material is a composite particle including an ion conductive phase, a Si phase dispersed in the ion conductive phase, and an electrically conductive layer covering a surface of the ion conductive phase. The ion conductive phase is, for example, at least one selected from the group consisting of a silicate phase, an amorphous carbon phase, a silicide phase, and a silicon oxide phase. The Si phase is formed by Si being dispersed in a small particle form. The ion conductive phase is a continuous phase formed from a group of particles smaller than the Si phase. The electrically conductive layer is formed from a material having a higher electrical conductivity than the ion conductive phase, and forms a superior electrically conductive path in the negative electrode mixture layer 32.

An example of a desirable composite material containing Si is a composite particle having a sea-island structure in which small Si is approximately uniformly dispersed in an amorphous silicon oxide phase, and which is represented by a general formula SiO$_x$ (wherein 0<x≤2) as a whole. The primary composition of the silicon oxide may be silicon dioxide. A content ratio of oxygen with respect to Si (x) is, for example, 0.5≤x<2.0, and is desirably 0.8≤x≤1.5.

A content of the silicon-containing material with respect to the total mass of the negative electrode active material in the first negative electrode mixture layer 34 is desirably smaller than a content of the silicon-containing material with respect to the total mass of the negative electrode active material in the second negative electrode mixture layer 36. A volume of the silicon-containing material changes more significantly during charging and discharging in comparison to the carbon material such as the graphite particles. In consideration of this, the content of the silicon-containing material in the first negative electrode mixture layer 34 is set smaller than the content of the silicon-containing material in the second negative electrode mixture layer 36, so that pores inside the first negative electrode mixture layer 34 can be more easily maintained during charging and discharging, and it becomes easier for the non-aqueous electrolyte to permeate to the side of the negative electrode current collector 30 through the first negative electrode mixture layer 34. In addition, with the content of the silicon-containing material in the first negative electrode mixture layer 34 being smaller than the content of the silicon-containing material in the second negative electrode mixture layer 36, isolation of the silicon-containing material due to repulsion of graphite having high hardness and the silicon-containing material during the charging and discharging can be suppressed, and reduction of the cycle characteristics can be suppressed. The content of the silicon-containing material with respect to the total mass of the negative electrode active material in the first negative electrode mixture layer 34 is, for example, greater than or equal to 1 mass% and less than or equal to 15 mass%. The content of the silicon-containing material with respect to the total mass of the negative electrode material in the second negative electrode mixture layer 36 is, for example, greater than or equal to 3 mass% and less than or equal to 25 mass%.

The negative electrode mixture layer 32 contains a binder in addition to the negative electrode active material. A content of the binder is desirably greater than or equal to 0.5 mass% and less than or equal to 15 mass% with respect to the mass of the negative electrode mixture layer 32, and is more desirably greater than or equal to 1 mass% and less than or equal to 10 mass%. The negative electrode mixture layer 32 may contain materials other than the negative electrode active material and the binder such as, for example, a conductive agent and a thickener.

As the binder contained in the negative electrode mixture layer 32, similar to the case of the positive electrode 11, the fluororesin, PAN, polyimide, the acrylic resin, polyolefin, and the like may be employed, but desirably, styrene butadiene rubber (SBR) is employed. The negative electrode mixture layer 32 may further contain the CMC or a salt thereof, polyacrylic acid (PAA) or a salt thereof, polyvinyl alcohol (PVA), or the like. As the binder of the negative electrode mixture layer 32, desirably, SBR and CMC or a salt thereof are used in combination.

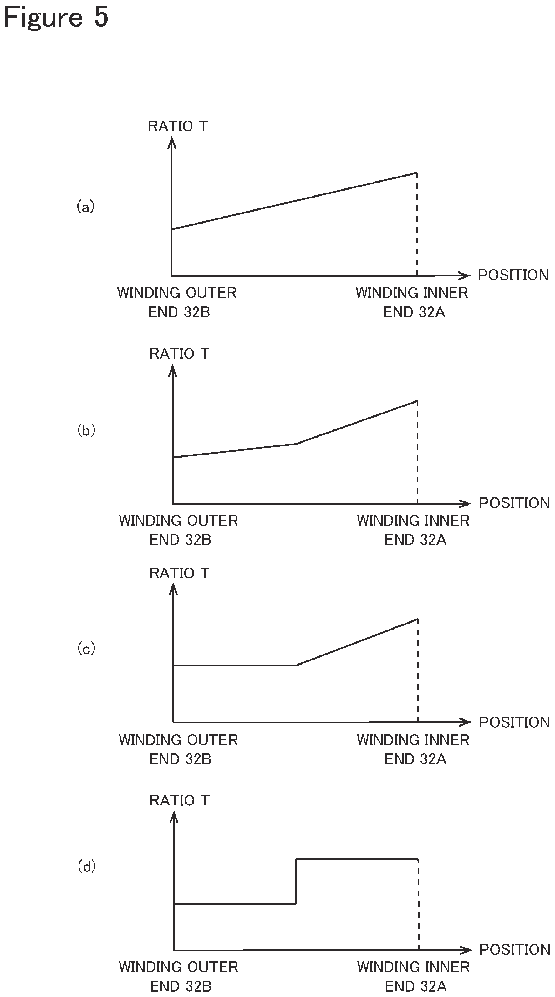

Next, with further reference to FIG. 5, thicknesses of the first negative electrode mixture layer 34 and the second negative electrode mixture layer 36 forming the negative electrode mixture layer 32 will be described in detail. FIG. 5 is a diagram showing correlation between a position in a longitudinal direction of the negative electrode 12, and a ratio T of the thickness of the first negative electrode mixture layer 34 with respect to a total thickness (thickness of the negative electrode mixture layer 32) of the first negative electrode mixture layer 34 and the second negative electrode mixture layer 36. The ratio T is, for example, 1.0 when the negative electrode mixture layer 32 is formed solely of the first negative electrode mixture layer 34, or is 0 when the negative electrode mixture layer 32 is formed solely of the second negative electrode mixture layer 36.

As shown in FIG. 5, in the negative electrode mixture layer 32, the ratio T at the winding inner end 32A is larger than the ratio T at the winding outer end 32B. Because a tortuosity is larger at the winding inner side than the winding outer side when the electrode assembly 14 is wound, the stress applied to the electrode plate is increased at the winding inner side, and the pores inside the negative electrode mixture layer 32 are reduced. As a consequence, an amount of non-aqueous electrolyte retained at the winding inner side of the negative electrode 12 tends to be smaller than an amount of non-aqueous electrolyte retained at the winding outer side of the negative electrode 12. As a result, unevenness in the charge and discharge reactions tends to occur in the thickness direction of the negative electrode mixture layer 32 at the winding inner side of the negative electrode 12, and the charge-discharge cycle characteristics of the battery tend to be reduced. In consideration of this, the ratio T at the winding inner end 32A is set larger than the ratio T at the winding outer end 32B, that is, the thickness of the first negative electrode mixture layer at the winding inner end 32A is set larger than the thickness of the first negative electrode mixture layer 34 at the winding outer end 32B, so that the porosity on the surface side of the negative electrode mixture layer 32 at the winding inner end 32A can be increased. As a result, the amount of non-aqueous electrolyte retained at the winding inner end 32A can be increased, and the charge and discharge reactions at the winding inner side of the negative electrode 12 tend to proceed more evenly in the thickness direction of the negative electrode mixture layer 32. When the ratio T is increased along the longitudinal direction of the negative electrode mixture layer 32, that is, when the thickness of the first negative electrode mixture layer 34 is increased along the longitudinal direction of the negative electrode mixture layer 32, the pressing pressure necessary for rolling during the manufacture of the negative electrode 12 must be increased. With this configuration, stress remaining on the negative electrode mixture layer 32 due to the rolling is increased, and, consequently, a force generated when the stress is alleviated also increases. As a result, a distribution in the thickness of the negative electrode mixture layer 32 tends to be more easily generated in the longitudinal direction of the electrode plate, unevenness of the charge and discharge reactions tends to occur, and, in particular, when the thickness of the negative electrode mixture layer 32 is large at the winding inner side, the gap through which the non-aqueous electrolyte passes is reduced, possibly degrading the charge-discharge cycle characteristics.

The ratio T at the winding inner end 32A is desirably greater than or equal to 0.3 and less than or equal to 0.8, is more desirably greater than or equal to 0.35 and less than or equal to 0.75, and is further desirably greater than or equal to 0.4 and less than or equal to 0.7. The ratio T at the winding outer end 32B is desirably greater than or equal to 0.5, is more desirably greater than or equal to 0.1 and less than or equal to 045, and is further desirably greater than or equal to 0.15 and less than or equal to 0.4. With these configurations, the charge-discharge cycle characteristics of the battery can be further improved.

In the present embodiment, as shown in FIG. 5(a), the ratio T is continuously increased with a constant rate from the winding outer end 32B to the winding inner end 32A. In the winding process of the electrode assembly 14, as the tortuosity is increased toward the winding inner side, the stress applied to the electrode plate is increased. Thus, by increasing the ratio T in a continuous manner with a constant rate from the winding outer end 32B toward the winding inner end 32A, the thickness of the first negative electrode mixture layer 34 can be increased toward the winding inner side at which the stress applied to the electrode plate is increased. As a result, it becomes easier to increase the amount of non-aqueous electrolyte retained by the negative electrode mixture layer 32 while maintaining the thickness of the negative electrode mixture layer 32 constant along the longitudinal direction of the electrode plate, and the charge-discharge cycle characteristics of the battery can be further improved,

In addition, as shown in FIG. 5(b), a slope which indicates a rate of increase of the ratio T from the winding outer end 32B to the winding inner end 32A does not need to be constant, and the slope may change in the partway. Alternatively, as shown in FIG. 5(c), the ratio T may be constant at the winding outer side, and may be increased from partway toward the winding inner end 32A. Alternatively, as shown in FIG. 5(d), the ratio T may be constant at the winding inner side and the winding outer side, and the ratio T may change in one or more steps in the partway.

Next, a production method of the negative electrode 12 having the negative electrode mixture layer 32 including the first negative electrode mixture layer 34 and the second negative electrode mixture layer 36 will be described. The negative electrode 12 can be produced, for example, through an active material production process to produce a negative electrode active material including graphite particles and the like, an adjustment process to adjust a negative electrode mixture slurry including the negative electrode active material and the binder, an application process to apply the negative electrode mixture slurry on a surface of the negative electrode current collector 30, and to dry the applied slurry, and a rolling process to roll the applied film produced in the application process. Here, in the adjustment process, a first negative electrode mixture slurry containing the graphite particles A and a second negative electrode mixture slurry which does not contain the graphite particles A are produced.

In the application process, for example, an application apparatus having two ejection ports is used, to simultaneously apply the first negative electrode mixture slurry and the second negative electrode mixture slurry on the surface of the negative electrode current collector 30 in such a manner that the first negative electrode mixture slurry and the second negative electrode mixture slurry are applied in this order from the surface side of the negative electrode current collector 30. In this process, an amount of ejection of the first negative electrode mixture slurry is reduced and an amount of ejection of the second negative electrode mixture slurry is increased from the winding inner side toward the winding outer side of the electrode plate. By changing the amounts of ejection of the first negative electrode mixture slurry and the second negative electrode slurry, the ratio of the thicknesses of the first negative electrode mixture layer 34 and the second negative electrode mixture layer 36 can be changed. In addition, in the application process, a multilayer die coater may be employed, and the first negative electrode mixture slurry and the second negative electrode mixture slurry may be applied while a mixture ratio of the slurries is changed,

EXAMPLES

The present disclosure will now be further described with reference to Examples and Comparative Examples, but the present disclosure is not limited to Examples described below.

<Example 1>

[Production of Positive Electrode]

As a positive electrode active material, a lithium-transition metal oxide of a particulate form and represented by $LiCo_{0.979}Zr_{0.001}Mg_{0.01}Al_{0.01}O_2$ was used. The positive electrode active material, acetylene black (AB) serving as a conductive agent, and polyvinylidene fluoride powder serving as a binder were mixed with a mass ratio of 95:2.5:2.5, and a suitable amount of N-methyl-2-pyrrolidone (NMP) was added to the mixture, to prepare a positive electrode mixture slurry. The positive electrode mixture slurry was then applied through a doctor blade method on both surfaces of a positive electrode current collector formed from an aluminum foil, the applied film was dried, and the dried film was rolled with a rolling roller, to produce a positive electrode, on both surface of the positive electrode current collector of which the positive electrode mixture layers were formed. In addition, an exposed portion in which a surface of the positive electrode current collector is exposed was provided at a part of the positive electrode.

[Production of Negative Electrode]

Graphite particles formed from natural graphite having a D50 of 18 $\mu$m were mixed with a pitch, and the mixture was thermally treated, to obtain graphite particles a1 having a surface of the graphite particle coated with amorphous graphite. In addition, graphite particles obtained without the thermal treatment and in which the surface was not coated with amorphous graphite were prepared as graphite particles b1.

20% compressive strengths of the graphite particles a1 and the graphite particles b1 were measured using a micro-compression testing machine ("MCT-W201" manufactured by Shimadzu Corporation). The measurement conditions were as follows. In the measurement, an average value of 10 measurements was taken as the 20% compressive strength. As a result, the 20% compressive strength of the graphite particles a1 was 25 MPa, and the 20% compressive strength of the graphite particles b1 was 12 MPa.

Next, the graphite particles a1, the graphite particles b1, and SiO were mixed with a mass ratio of 40:55:5, to obtain a first negative electrode active material. The first negative electrode active material, carboxymethylcellulose (CMC) serving as a thickener, and a styrene-butadiene copolymer (SBR) serving as a binder were mixed with a mass ratio of 98:1:1, and water was added, to prepare a first negative electrode mixture slurry.

The graphite particles b1 and SiO were mixed with a mass ratio of 95:5, to obtain a second negative electrode active material. The second negative electrode active material, carboxymethylcellulose (CMC) serving as a thickener, and the styrene-butadiene copolymer (SBR) serving as a binder were mixed with a mass ratio of 98:1:1, and water was added, to prepare a second negative electrode mixture slurry.

Next, the first negative electrode mixture slurry and the second negative electrode mixture slurry were simultaneously applied on both surfaces of a negative electrode current collector formed from a copper foil. In this process, an amount of ejection of the first negative electrode mixture slurry was reduced and an amount of ejection of the second negative electrode mixture slurry was increased from a winding inner side of the electrode plate toward a winding outer side. More specifically, the negative electrode mixture slurries were applied such that an application mass ratio per unit area between the first negative electrode mixture slurry and the second negative electrode mixture slurry was 50:50 at a winding inner end, and 20:80 at a winding outer end. In addition, the negative electrode mixture slurries were applied in such a manner that a total of the applied masses per unit area of the first negative electrode mixture slurry and the second negative electrode mixture slurry was uniform over a length direction of the electrode plate. Then, the first negative electrode mixture slurry and the second negative electrode mixture slurry were rolled using a rolling roller, to produce a negative electrode.

In addition, an exposed portion in which a surface of the negative electrode current collector was exposed was provided at a part of the negative electrode. After the rolling, a ratio T of a thickness of the first negative electrode mixture layer 34 with respect to a thickness of the negative electrode mixture layer 32 at the winding inner end was 0.5, and the ratio T at the winding outer end was 0.2. In addition, from the winding outer end toward the winding inner end, the ratio T was continuously increased with a constant rate, as shown in FIG. 5(a).

[Preparation of Non-Aqueous Electrolyte]

Ethylene carbonate (EC), ethylmethyl carbonate (EMC), and dimethyl carbonate (DEC) were mixed with a volume ratio of 3:3:4. Lithium hexafluorophosphate ($LiPF_6$) was dissolved in the mixture solvent in a concentration of 1.2 mole/litter, to prepare a non-aqueous electrolyte.

[Production of Test Cell (Non-Aqueous Electrolyte Secondary Battery)]

A positive electrode lead was attached to the exposed portion of the positive electrode, a negative electrode lead was attached to the exposed portion of the negative electrode, and the positive electrode and the negative electrode were wound in a spiral shape with a separator made of polyolefin therebetween, to produce an electrode assembly of wound type. Then, insulating plates were respectively disposed above and below the electrode assembly, the negative electrode lead was welded to a case body, the positive electrode lead was welded to a sealing assembly, and the electrode assembly was housed in the case body. After the non-aqueous electrolyte was injected through a depressurization method into the case body, an opening of the case body was sealed by the sealing assembly via the gasket, to produce a test cell.

[Measurement of Liquid Absorption Time]

After the negative electrode produced as described above was dried for 10 hours in a constant-temperature bath heated to a temperature of 200°C under nitrogen atmosphere, the negative electrode was cut in a size of 5 cm x 5 cm to produce a test piece. 3.0 μL of polypropylene carbonate (PC) was dropped from a vertical direction onto a surface of the test piece, and time until the PC is absorbed into the inside of the sample was measured by human eyes. In this measurement, the measurement was performed six times, and an average value was taken as a liquid absorption time. Shorter liquid absorption time means the ability for smoother exchange of the non-aqueous electrolyte from the surface of the negative electrode mixture layer to the side of the negative electrode current collector, and thus, with the shorter liquid absorption time, the non-aqueous electrolyte discharged from the negative electrode mixture layer during discharge is more quickly absorbed by the negative electrode mixture layer during charging. Therefore, it can be deduced that shorter liquid absorption time results in improved charge-discharge cycle characteristics.

[Evaluation of Cycle Characteristics (Capacity Maintenance Percentage)]

Under a temperature environment of 25°C, the test cell was charged with a constant current of 0.5C to 4.2V, and then was charged with a constant voltage of 4.2V until the current value corresponds to 0.05C. After the test cell was rested for 1 hour, the test cell was discharged with a constant current of 1.0C until 2.5V. With this sequence of processes as one cycle, a discharge capacity at 1.0C was measured after 400 cycles. A capacity maintenance percentage was calculated according to the below equation.

Capacity maintenance percentage [%] = (discharge capacity after 400 cycles/discharge capacity at 1st cycle) $\times$ 100

<Comparative Example 1>

A test cell was produced in a manner similar to Example 1 except that, during the production of the negative electrode, the application mass ratio per unit area between the first negative electrode mixture slurry and the second negative electrode mixture slurry was set to 35:65 from the winding inner end to the winding outer end, and the test cell was evaluated. After the rolling, the ratio T of the thickness of the first negative electrode mixture layer 34 with respect to the thickness of the negative electrode mixture layer 32 was 0.35 and constant from the winding inner end to the winding outer end.

The liquid absorption times and the capacity maintenance percentages for Example 1 and Comparative Example 1 are shown in Table 1. For the liquid absorption time, the liquid absorption times at the winding inner end and the winding outer end are shown. Table 1 also shows the 20% compressive strength of the graphite particles a1, the content of the graphite particles a1 with respect to the total mass of the negative electrode active material in the first negative electrode mixture layer, and the ratios T at the winding inner end and the winding outer end. The liquid absorption times of Example 1 and Comparative Example 1 shown in Table 1 are relative values with the liquid absorption time of Comparative Example 1 as a value of 100. A smaller value of the liquid absorption time means shorter time.

[Table 1]

| | NEGATIVE ELECTRODE | | | | EVALUATION RESULT | | |
|---|---|---|---|---|---|---|---|
| | 20% COMPRESSIVE STRENGTH OF GRAPHITE PARTICLES a1 [MPa] | CONTENT OF GRAPHITE PARTICLES a1 IN FIRST NEGATIVE ELECTRODE MIXTURE LAYER [MASS%] | RATIO T AT WINDING INNER END | RATIO T AT WINDING INNER END | LIQUID ABSORPTION TIME AT WINDING INNER END (RELATIVE VALUE) | LIQUID ABSORPTION TIME AT WINDING OUTER END (RELATIVE VALUE) | CAPACITY MAINTENANCE PERCENTAGE |
| EXAMPLE 1 | 25 | 40 | 0.5 | 0.2 | 95 | 103 | 88 |
| COMPARATIVE EXAMPLE 1 | 25 | 40 | 0.35 | 0.35 | 100 | 100 | 83 |

As shown in Table 1, the test cell of Example 1 has improved capacity maintenance percentage, that is, improved cycle characteristics, in comparison to the test cell of Comparative Example 1. It can be deduced that this is the case because the liquid absorption time at the winding inner end is shortened, the amount of non-aqueous electrolyte retained at the winding inner side of the negative electrode is increased, and the charge and discharge reactions are promoted at the winding inner side. Therefore, the cycle characteristics of the battery can be improved by employing a two-layer structure for the negative electrode mixture layer including the first negative electrode mixture layer containing graphite particles having the 20% compressive strength of greater than or equal to 20 MPa, and a second negative electrode mixture layer, and setting the ratio T at the winding inner end to be greater than the ratio T at the winding outer end.

<Example 2>

A test cell was produced in a manner similar to Example 1 except that, during the production of the negative electrode, the graphite particles a1, the graphite particles b1, and SiO were mixed with a mass ratio of 60:35:5, to obtain the first negative electrode active material, and the test cell was evaluated.

<Example 3>

A test cell was produced in a manner similar to Example 1 except that, during the production of the negative electrode, the graphite particles a1, the graphite particles b1, and SiO were mixed with a mass ratio of 80:15:5, to obtain the first negative electrode active material, and the test cell was evaluated.

<Comparative Example 2>

A test cell was produced in a manner similar to Example 2 except that, during the production of the negative electrode, the application mass ratio per unit area between the first negative electrode slurry and the second negative electrode slurry was set to 35:65 from the winding inner end to the winding outer end, and the test cell was evaluated.

<Comparative Example 3>

A test cell was produced in a manner similar to Example 3 except that, during the production of the negative electrode, the application mass ratio per unit area between the first negative electrode slurry and the second negative electrode slurry was set to 35:65 from the winding inner end to the winding outer end, and the test cell was evaluated.
Liquid absorption times and capacity maintenance percentages of Examples 2 and 3 and Comparative Examples 2 and 3 are shown in Tables 2 and 3. For the liquid absorption time, the liquid absorption times at the winding inner end and the winding outer end are shown. In addition, similar to Table 1, Tables 2 and 3 also show the 20% compressive strength of the graphite particles a1, the content of the graphite particles a1 with respect to the total mass of the negative electrode active material in the first negative electrode mixture layer, and the ratios T at the winding inner end and the winding outer end. The liquid absorption times of Example 2 and Comparative Example 2 shown in Table 2 are relative values with the liquid absorption time of Comparative Example 2 as a value of 100. The liquid absorption times of Example 3 and Comparative Example 3 shown in Table 3 are relative values with the liquid absorption time of Comparative Example 3 as a value of 100.

[Table 2]

| | NEGATIVE ELECTRODE | | | | EVALUATION RESULT | | |
|---|---|---|---|---|---|---|---|
| | 20% COMPRESSIVE STRENGTH OF GRAPHITE PARTICLES al [MPa] | CONTENT OF GRAPHITE PARTICLES a1 IN FIRST NEGATIVE ELECTRODE MIXTURE LAYER [MASS%] | RATIO T AT WINDING INNER END | RATIO T AT WINDING INNER END | LIQUID ABSORPTION TIME AT WINDING INNER END (RELATIVE VALUE) | LIQUID ABSORPTION TIME AT WINDING OUTER END (RELATIVE VALUE) | CAPACITY MAINTENANCE PERCENTAGE |
| EXAMPLE 2 | 25 | 60 | 0.5 | 0.2 | 95 | 104 | 91 |
| COMPARATIVE EXAMPLE 2 | 25 | 60 | 0.35 | 0.35 | 100 | 100 | 87 |

[Table 3]

| | NEGATIVE ELECTRODE | | | | EVALUATION RESULT | | |
|---|---|---|---|---|---|---|---|
| | 20% COMPRESSIVE STRENGTH OF GRAPHITE PARTICLES a1 [MPa] | CONTENT OF GRAPHITE PARTICLES a1 IN FIRST NEGATIVE ELECTRODE MIXTURE LAYER [MASS%] | RATIO T AT WINDING INNER END | RATIO T AT WINDING INNER END | LIQUID ABSORPTION TIME AT WINDING INNER END (RELATIVE VALUE) | LIQUID ABSORPTION TIME AT WINDING OUTER END (RELATIVE VALUE) | CAPACITY MAINTENANCE PERCENTAGE |
| EXAMPLE 3 | 25 | 80 | 0.5 | 0.2 | 94 | 101 | 93 |
| COMPARATIVE EXAMPLE 3 | 25 | 80 | 0.35 | 0.35 | 100 | 100 | 88 |

As shown in Tables 2 and 3, the test cells of Examples 2 and 3 have improved capacity maintenance percentages, that is, improved capacity maintenance percentages, in comparison to the test cells of Comparative Examples 2 and 3. Therefore, even when the ratio T at the winding inner end is set at a further larger value, the cycle characteristics of the battery can be improved.

The present disclosure is further described with the following embodiment.

Configuration 1: A non-aqueous electrolyte secondary battery comprising: an electrode assembly in which a positive electrode having a band shape and a negative electrode having a band shape are wound with a separator therebetween; a non-aqueous electrolyte; and a outer housing body that houses the electrode assembly and the non-aqueous electrolyte, wherein the negative electrode comprises a negative electrode current collector, and a negative electrode mixture layer disposed on at least one surface of the negative electrode current collector, and which contains a negative electrode active material, the negative electrode mixture layer comprises a first negative electrode mixture layer disposed on a side of a surface of the negative electrode mixture layer, and a second negative electrode mixture layer disposed between the first negative electrode mixture layer and the negative electrode current collector, the first negative electrode mixture layer contains graphite particles A having a 20% compressive strength of greater than or equal to 20 MPa, the second negative electrode mixture layer contains graphite particles B having the 20% compressive strength of less than 20MPa, and, in the negative electrode mixture layer, a ratio of a thickness of the first negative electrode mixture layer with respect to a total thickness of the first negative electrode mixture layer and the second negative electrode mixture layer at a winding inner end is greater than a ratio of a thickness of the first negative electrode mixture layer with respect to a total thickness of the first negative electrode mixture layer and the second negative electrode mixture layer at a winding outer end.

Configuration 2: The non-aqueous electrolyte secondary battery according to Configuration 1, wherein the negative electrode mixture layer has a region in which a ratio of a thickness of the first negative electrode mixture layer with respect to a total thickness of the first negative electrode mixture layer and the second negative electrode mixture layer continuously increases, from a side of the winding outer end toward a side of the winding inner end.

Configuration 3: The non-aqueous electrolyte secondary battery according to Configuration 1 or 2, wherein, in the negative electrode mixture layer, a ratio of a thickness of the first negative electrode mixture layer with respect to a total thickness of the first negative electrode mixture layer and the second negative electrode mixture layer changes in one or more steps.

Configuration 4: The non-aqueous electrolyte secondary battery according to any one of Configurations 1 to 3, wherein the ratio of the thickness of the first negative electrode mixture layer with respect to the total thickness of the first negative electrode mixture layer and the second negative electrode mixture layer at the winding inner end is greater than or equal to 0.3 and less than or equal to 0.8.

Configuration 5: The non-aqueous electrolyte secondary battery according to any one of Configurations 1 to 4, wherein the ratio of the thickness of the first negative electrode mixture layer with respect to the total thickness of the first negative electrode mixture layer and the second negative electrode mixture layer at the winding outer end is less than or equal to 0.5.

Configuration 6: The non-aqueous electrolyte secondary battery according to any one of Configurations 1 to 5, wherein, in the first negative electrode mixture layer, a content of the graphite particles A with respect to a total mass of the negative electrode active material is greater than or equal to 30 mass% and less than or equal to 95 mass%.

Configuration 7: The non-aqueous electrolyte secondary battery according to any one of Configurations 1 to 6, wherein, in the second negative electrode mixture layer, a content of the graphite particles B with respect to a total mass of the negative electrode active material is greater than or equal to 50 mass% and less than or equal to 100 mass%.

Configuration 8: The non-aqueous electrolyte secondary battery according to any one of Configurations 1 to 7, wherein the negative electrode mixture layer contains a silicon-containing material.

Configuration 9: The non-aqueous electrolyte secondary battery according to Configuration 8, wherein a content of the silicon-containing material with respect to a total mass of the negative electrode active material in the first negative electrode mixture layer is smaller than a content of the silicon-containing material with respect to a total mass of the negative electrode active material in the second negative electrode mixture layer.

REFERENCE SIGNS LIST

10 non-aqueous electrolyte secondary battery, 11 positive electrode, 12 negative electrode, 13 separator, 14 electrode assembly, 16 outer housing body, 17 sealing assembly, 18, 19 insulating plate, 20 positive electrode lead, 21 negative electrode lead, 22 groove portion, 23 internal terminal plate, 24 lower vent member, 25 insulating member, 26 upper vent member, 27 cap, 28 gasket, 29 winding axis, 30 negative electrode current collector, 32 negative electrode mixture layer, 32A winding inner end, 32B winding outer end, 34 first negative electrode mixture layer, 36 second negative electrode mixture layer, 38 exposed portion.

**EP 4 787 453 A1**

**Claims**

1. A non-aqueous electrolyte secondary battery comprising:

   an electrode assembly in which a positive electrode having a band shape and a negative electrode having a band shape are wound with a separator therebetween;
   a non-aqueous electrolyte; and
   a outer housing body that houses the electrode assembly and the non-aqueous electrolyte, wherein
   the negative electrode comprises a negative electrode current collector, and a negative electrode mixture layer disposed on at least one surface of the negative electrode current collector, and which contains a negative electrode active material,
   the negative electrode mixture layer comprises a first negative electrode mixture layer disposed on a side of a surface of the negative electrode mixture layer, and a second negative electrode mixture layer disposed between the first negative electrode mixture layer and the negative electrode current collector,
   the first negative electrode mixture layer contains graphite particles A having a 20% compressive strength of greater than or equal to 20 MPa,
   the second negative electrode mixture layer contains graphite particles B having the 20% compressive strength of less than 20 MPa, and
   in the negative electrode mixture layer, a ratio of a thickness of the first negative electrode mixture layer with respect to a total thickness of the first negative electrode mixture layer and the second negative electrode mixture layer at a winding inner end is greater than a ratio of a thickness of the first negative electrode mixture layer with respect to a total thickness of the first negative electrode mixture layer and the second negative electrode mixture layer at a winding outer end.

2. The non-aqueous electrolyte secondary battery according to claim 1, wherein
   the negative electrode mixture layer has a region in which a ratio of a thickness of the first negative electrode mixture layer with respect to a total thickness of the first negative electrode mixture layer and the second negative electrode mixture layer continuously increases, from a side of the winding outer end toward a side of the winding inner end.

3. The non-aqueous electrolyte secondary battery according to claim 1, wherein
   in the negative electrode mixture layer, a ratio of a thickness of the first negative electrode mixture layer with respect to a total thickness of the first negative electrode mixture layer and the second negative electrode mixture layer changes in one or more steps.

4. The non-aqueous electrolyte secondary battery according to claim 1, wherein the ratio of the thickness of the first negative electrode mixture layer with respect to the total thickness of the first negative electrode mixture layer and the second negative electrode mixture layer at the winding inner end is greater than or equal to 0.3 and less than or equal to 0.8.

5. The non-aqueous electrolyte secondary battery according to claim 1, wherein the ratio of the thickness of the first negative electrode mixture layer with respect to the total thickness of the first negative electrode mixture layer and the second negative electrode mixture layer at the winding outer end is less than or equal to 0.5.

6. The non-aqueous electrolyte secondary battery according to claim 1, wherein
   in the first negative electrode mixture layer, a content of the graphite particles A with respect to a total mass of the negative electrode active material is greater than or equal to 30 mass% and less than or equal to 95 mass%.

7. The non-aqueous electrolyte secondary battery according to claim 1, wherein
   in the second negative electrode mixture layer, a content of the graphite particles B with respect to a total mass of the negative electrode active material is greater than or equal to 50 mass% and less than or equal to 100 mass%.

8. The non-aqueous electrolyte secondary battery according to claim 1, wherein
   the negative electrode mixture layer contains a silicon-containing material.

9. The non-aqueous electrolyte secondary battery according to claim 8, wherein
   a content of the silicon-containing material with respect to a total mass of the negative electrode active material in the first negative electrode mixture layer is smaller than a content of the silicon-containing material with respect to a total mass of the negative electrode active material in the second negative electrode mixture layer.

Figure 1

# Figure 2

Figure 3

WINDING
OUTER
SIDE
←

WINDING
INNER
SIDE
→

WIDTH
DIRECTION

LONGITUDINAL
DIRECTION

38(30)

21

32B

32

12

32A

# Figure 4

# Figure 5

(a)

RATIO T

POSITION

WINDING OUTER
END 32B

WINDING INNER
END 32A

(b)

RATIO T

POSITION

WINDING OUTER
END 32B

WINDING INNER
END 32A

(c)

RATIO T

POSITION

WINDING OUTER
END 32B

WINDING INNER
END 32A

(d)

RATIO T

POSITION

WINDING OUTER
END 32B

WINDING INNER
END 32A

## INTERNATIONAL SEARCH REPORT

| International application No. |
|---|
| **PCT/JP2024/034323** |

| **A.** | **CLASSIFICATION OF SUBJECT MATTER** |
|---|---|

*H01M 4/133*(2010.01)i; *H01M 4/36*(2006.01)i; *H01M 4/38*(2006.01)i; *H01M 4/48*(2010.01)i; *H01M 4/587*(2010.01)i; *H01M 10/0525*(2010.01)i; *H01M 10/0587*(2010.01)i
FI: H01M4/133; H01M4/36 E; H01M4/38 Z; H01M4/48; H01M4/587; H01M10/0525; H01M10/0587

According to International Patent Classification (IPC) or to both national classification and IPC

| **B.** | **FIELDS SEARCHED** |
|---|---|

Minimum documentation searched (classification system followed by classification symbols)

H01M4/133; H01M4/36; H01M4/38; H01M4/48; H01M4/587; H01M10/0525; H01M10/0587

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | WO 2022/176650 A1 (SANYO ELECTRIC CO., LTD.) 25 August 2022 (2022-08-25) paragraphs [0005]-[0006], [0014] | 1-9 |
| A | JP 2004-31217 A (SONY CORPORATION) 29 January 2004 (2004-01-29) paragraph [0010], claim 1 | 1-9 |
| A | JP 2013-51028 A (PANASONIC CORPORATION) 14 March 2013 (2013-03-14) paragraph [0017] | 1-9 |
| A | WO 2022/163618 A1 (SANYO ELECTRIC CO., LTD.) 04 August 2022 (2022-08-04) paragraph [0036] | 1-9 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 December 2024** | **17 December 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/034323**

| Patent document cited in search report | | | Publication date (day/month/year) | Patent family member(s) | | | Publication date (day/month/year) |
|---|---|---|---|---|---|---|---|
| WO | 2022/176650 | A1 | 25 August 2022 | US | 2024/0145681 | A1 | |
| | | | | paragraphs [0006]-[0007], [0016] | | | |
| | | | | EP | 4297120 | A1 | |
| | | | | CN | 116830292 | A | |
| JP | 2004-31217 | A | 29 January 2004 | (Family: none) | | | |
| JP | 2013-51028 | A | 14 March 2013 | WO | 2011/080901 | A1 | |
| WO | 2022/163618 | A1 | 04 August 2022 | US | 2024/0088390 | A1 | |
| | | | | paragraph [0041] | | | |
| | | | | CN | 116802827 | A | |

Form PCT/ISA/210 (patent family annex) (July 2022)

**EP 4 787 453 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019239652 A